(19) Europäisches Patentamt
European Patent Office
Office européen des brevets

(11) **EP 2 403 042 A1**

(12) # EUROPEAN PATENT APPLICATION

(43) Date of publication:
**04.01.2012 Bulletin 2012/01**

(51) Int Cl.:
*H01M 4/485* (2010.01)     *H01M 4/525* (2010.01)

(21) Application number: **11171713.8**

(22) Date of filing: **28.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.07.2010 US 361234 P
24.06.2011 US 168770**

(71) Applicant: **Samsung SDI Co., Ltd.
Yongin-si, Gyeonggi-do (KR)**

(72) Inventors:
  • **Song, Jay-Hyok**
    **Gyeonggi-do (KR)**
  • **Lee, Young-Hun**
    **Gyeonggi-do (KR)**
  • **Song, Yu-Mi**
    **Gyeonggi-do (KR)**
  • **Kim, Young-Ki**
    **Gyeonggi-do (KR)**
  • **Lee, Soon-Rewl**
    **Gyeonggi-do (KR)**
  • **Choi, Ick-Kyu**
    **Gyeonggi-do (KR)**
  • **Kim, Yoon-Chang**
    **Gyeonggi-do (KR)**

(74) Representative: **Hewett, Jonathan Michael
Richard
Venner Shipley LLP
20 Little Britain
London EC1A 7DH (GB)**

(54) **Positive active material for lithium secondary battery and lithium secondary battery using the same**

(57)     A positive active material for a lithium secondary battery containing a composite that includes lithium aluminium oxide and lithium nickel oxide ($Li_2NiO_2$) and a lithium secondary battery using the same

EP 2 403 042 A1

**Description**

The present invention relates to a positive active material for a lithium secondary battery and a lithium secondary battery using the same.

There has recently been interest in lithium secondary batteries as power sources of small portable electronic devices, wherein the lithium secondary batteries use an organic electrolyte and thus have discharge voltage higher by 2 times than batteries using a general aqueous alkali solution, thereby having high energy density.

A lithium secondary battery may be manufactured by using materials that may intercalate or deintercalate lithium ions as a negative electrode and a positive electrode and interposing an electrolyte between the positive electrode and the negative electrode and may generate electrical energy by an oxidization reaction and reduction reaction occurring while intercalating and deintercalating lithium ions at the positive electrode and the negative electrode.

A carbon-based material is mainly used as an electrode active material for forming a negative electrode of a lithium secondary battery.

On the other hand, if the carbon-based material is changed to a silicon oxide-based material, performance of a lithium secondary battery may be improved. However, as irreversibility may exist in the silicon oxide-based material, the silicon oxide-based material may absorb lithium ions during first charging and thereafter may not discharge the lithium ions of about 20 % during discharging. Thus, about 20 % of positive active materials used in the first charging may not participate in charging and discharging after the first charging and thus performance of the battery may be deteriorated.

Accordingly, addition of positive materials including a large amount of lithium Li per weight or volume of a battery has been suggested. However, such positive materials generate gas during charging and thus stability of a battery may be deteriorated.

One or more embodiments of the present invention include a positive active material for a lithium secondary battery in which gas generation during charging is suppressed and a lithium secondary battery using the same.

According to one or more embodiments of the present invention, there is provided a positive active material for a lithium secondary battery containing a composite that includes a lithium aluminium oxide represented by Formula 1 below; and a lithium nickel oxide ($Li_2NiO_2$).

$$[\text{Formula 1}]$$

$$Li_aAl_xO_b$$

In Formula 1, a is a number in the range of about 0.1 to about 5.5, x is a number in the range of about 1 to about 5, and b is a number in the range of about 1.5 to about 8.

The positive active material for a lithium secondary battery may further include a lithium transition metal oxide.

According to one or more embodiments of the present invention, there is provided a lithium secondary battery including a positive electrode, a negative electrode, and a separator interposed between the positive electrode and the negative electrode, wherein the positive electrode includes the positive active material for a lithium secondary battery.

In a positive active material for a lithium secondary battery, gas generation may be suppressed under a repeated charging and discharging condition. Accordingly, a lithium secondary battery having improved reliability and stability may be manufactured.

A positive active material for a lithium secondary battery that contains a composite that includes a lithium aluminium oxide represented by Formula 1 below; and a lithium nickel oxide ($Li_2NiO_2$).

$$[\text{Formula 1}]$$

$$Li_aAl_xO_b$$

In Formula 1, a is a number in the range of about 0.1 to about 5.5, x is a number in the range of about 1 to about 5, and b is a number in the range of about 1.5 to about 8.

The lithium aluminium oxide may be $Li_5AlO_4$, $LiAlO_2$, or $LiAl_5O_8$.

The lithium aluminium oxide may include at least one selected from the group consisting of $Li_5AlO_4$, $LiAlO_2$, $LiAl_5O_8$, and mixtures thereof.

The amount of the lithium aluminium oxide may be in the range of about 0.001 to about 100 parts by weight based on 100 parts by weight of the lithium nickel oxide ($Li_2NiO_2$).

If the weight ratio of the lithium aluminium oxide and the lithium nickel oxide ($Li_2NiO_2$) is in the above range, deterioration of reliability and stability of a battery occurring due to carbon dioxide generated from non-reacted lithium oxide may be efficiently suppressed and a capacity of the battery may be excellent.

Hereinafter, a method of manufacturing a positive active material for a lithium secondary battery according to an embodiment of the present invention will be described.

Firstly, a lithium oxide, a nickel oxide, and an aluminium precursor are mixed with each other and are thermally treated.

The lithium oxide may be $Li_2O$ and the nickel oxide may be NiO.

The aluminium precursor is a starting material used to form the composite and may be gamma-alumina ($Al_2O_3$), aluminium hydroxide ($Al(OH)_3$), or the like.

The amount of the nickel oxide may be in the range of about 0.4 to about 2 mol, for example 0.8 to 1.2 mol based on 1 mol of the lithium oxide and the amount of the aluminium precursor may be in the range of about 0.01 to about 0.5 mol, for example 0.1 to 0.4 mol, based on 1 mol of the lithium oxide.

If the amounts of the nickel oxide and the aluminium precursor are in the above range, capacity of the battery may not be deteriorated and gas generation suppression may be excellent.

The thermal treatment may include a solid state reaction and may be performed at a temperature in the range of about 500 to about 700 °C. If the thermal treatment is performed within the above range, a capacity of a final positive active material is excellent.

The time of the thermal treatment may vary according to a temperature of the thermal treatment and may be in the range of about 5 to about 24 hours.

The thermal treatment may be performed under an inert gas atmosphere. An inert gas such as nitrogen or argon may be used in the inert gas atmosphere.

In the positive active material manufactured as above, a main peak of a Bragg angle 2θ for CuK-alpha characteristic X-ray wavelength, 1.541Å of the positive active material appears at least between 25 and 28 degrees.

Other peaks of a Bragg angle 2θ for CuK-alpha characteristic X-ray wavelength, 1.541Å of the positive active material appear at between 32 and 35 degrees.

The main peak at between 25 and 28 degrees is a peak for $Li_2NiO_2$. In addition to the main peaks, a peak for $Li_5AlO_4$ appears between 32 and 35 degrees.

According to the manufacturing method above, when $Li_2NiO_2$ is used as the positive active material, a non-reacted lithium oxide ($Li_2O$) becomes lithium carbonate ($Li_2CO_3$) according to Reaction Formula 1 below. Thus, when a battery is assembled, carbon dioxide gas may be generated within the battery as represented by Reaction Formula 2. A reaction may occur between the aluminium precursor used to form $Li_aAlO_b$ and the non-reacted lithium oxide, and a material having a phase that does not generate carbon dioxide may be formed therefrom. The material having a phase that does not generate carbon dioxide may be $Li_5AlO_4$, $LiAlO_2$, or $LiAl_5O_8$.

$$Li_2O \rightarrow Li_2CO_3 \qquad \text{[Reaction Formula 1]}$$

$$Li_2CO_3 \rightarrow Li_2O + CO_2 \qquad \text{[Reaction Formula 2]}$$

In the positive active material for a lithium secondary battery, gas generation may be suppressed at a battery driving voltage band of 4.5 V or below, for example, in the range of about 3.5 to about 4.5 V.

The capacity per weight of the positive active material for a lithium secondary battery is 350 mAh/g or above, for example, in the range of about 350 to about 500 mAh/g and thus is excellent.

The positive active material for a lithium secondary battery may be used by being mixed with at least one lithium transition metal oxide that is well known.

Examples of the well known lithium transition metal oxide may include at least one selected from the group consisting of $LiCoO_2$, $LiNiO_2$, $LiMnO_2$, $LiMn_2O_4$, $Li(Ni_aCo_bMn_c)O_2$ ($0 < a < 1$, $0 < b < 1$, $0 < c < 1$, $a+b+c=1$), $LiNi_{1-Y}Co_YO_2$, $LiCo_{1-Y}Mn_YO_2$, $LiNi_{1-Y}Mn_YO_2$ (here, $0 \leq Y < 1$), $Li(Ni_aCo_bMn_c)O_4$ ($0 < a < 2$, $0 < b < 2$, $0 < c < 2$, $a+b+c=2$), $LiMn_{2-z}Ni_zO_4$, $LiMn_{2-z}Co_zO_4$ (here, $0 < Z < 2$), $LiCoPO_4$, and $LiFePO_4$.

According to an embodiment of the present invention, the lithium transition metal oxide may include, for example, $LiCoO_2$.

The amount of the lithium nickel oxide ($Li_2NiO_2$) may be in the range of about 0.1 to about 20 parts by weigh, for example, about 8 to about 12 parts by weight, based on 100 parts by weight of the lithium transition metal oxide.

If the amount of the lithium nickel oxide is within the above range, gas generation may be efficiently suppressed without reduction in the capacity when charging and discharging is repeatedly performed.

The positive active material according to an embodiment of the present invention may be a composite of $Li_5AlO_4$

and $Li_2NiO_2$.

In the composite of $Li_5AlO_4$ and $Li_2NiO_2$, the amount of $Li_5AlO_4$ may be in the range of about 0.001 to about 100 parts by weight based on 100 parts by weight of $Li_2NiO_2$.

When the positive active material according to an embodiment of the present invention is a composite including one selected from the group consisting of $Li_5AlO_4$, $LiAlO_2$, and $LiAl_5O_8$, $Li_2NiO_2$ and $LiCoO_2$, the amount of $Li_2NiO_2$ may be in the range of about 0.1 to about 20 parts by weight, for example, about 8 to about 12 parts by weight, based on 100 parts by weight of $LiCoO_2$.

According to an embodiment of the present invention, the amount of one selected from the group consisting of $Li_5AlO_4$, $LiAlO_2$, and $LiAl_5O_8$ may be in the range of about 0.001 to about 100 parts by weight based on 100 parts by weight of $Li_2NiO_2$.

The average diameter of the positive active material containing the composite and the lithium nickel oxide may be in the range of about 1 to about 30 $\mu$m, for example, about 3 to about 7 $\mu$m, according to an embodiment of the present invention. If the average diameter of the positive active material is within the above range, a capacity of the battery is excellent.

Hereinafter, a method of manufacturing a lithium secondary battery using a negative active material for the lithium secondary battery will be described, wherein the lithium battery is a lithium secondary battery including a positive electrode, negative electrode, an electrolyte, and a separator.

The positive electrode and the negative electrode are formed by coating a composition for forming a positive active material and a composition for forming a negative active material on a current collector, respectively, and drying the coated compositions on the current collector.

The composition for forming the positive active material is prepared by mixing the composite, which is a positive active material, a conducting agent, a binder, and a solvent.

The positive active material may include a lithium transition metal oxide that is generally used as a positive active material in a lithium secondary battery.

The binder is used in bonding the active materials and the conducting agent and bonding the current collect and the amount of the binder may be in the range of about 1 to about 50 parts by weight, for example, about 10 to about 15 parts by weight, based on 100 parts by weight of the positive active material. If the amount of the binder is within the above range, binding strength between the current collector and the active materials improves.

Examples of the binder may include polyvinylidene fluoride, polyvinyl alcohol, carboxymethyl cellulose (CMC), starch, hydroxypropylcellulose, regenerated cellulose, polyvinylpyrrolidone, tetrafluoroethylene, polyethylene, polypropylene, ethylene-propylene- diene terpolymer (EPDM), sulfonated EPDM, styrene butyrene rubber, fluor rubber, and various copolymers.

The conducting agent is not particularly restricted as long as it does not a chemical change in the battery and has conductivity. Examples of the conducting agent may include graphite such as natural graphite or artificial graphite; carbon black such as carbon black, acetylene black, Ketjenblack, channel black, furnace black, or lamp black; a conductive fiber such as a carbon fiber or a metal fiber; metal powder such as fluorocarbon, aluminium, or nickel powder; conductive whisker such as zinc oxide or potassium titanate; a conductive oxide such as titanium oxide; and a conductive material such as polyphenylene derivative. The amount of the conducting agent may be in the range of about 2 to about 30 parts by weight, for example, about 10 to about 15 parts by weight, based on 100 parts by weight of the positive active material. If the amount of the conducting agent is within the above range, a conductivity of a finally obtained electrode is excellent and a capacity of the battery may be maintained.

The solvent may be N-methyl-2-pyrrolidone. The amount of the solvent may be in the range of about 100 to about 400 parts by weight based on 100 parts by weight of the positive active material. If the amount of the solvent is within the above range, an active material layer may be easily formed.

The positive current collector may have a thickness of about 3 to about 500 $\mu$m and may not be particularly restricted as long as it does not cause a chemical change in the battery of the present invention and has high conductivity. Examples of the positive current collector may include a stainless steel, aluminium, nickel, titanium, plasticized carbon, or carbon, nickel, titanium, plasticized carbon, or silver processed on a surface of aluminium or stainless steel. The surface of the positive current collector is unevenly treated, thereby improving adhesive strength of the positive active material. Examples of the positive current collector may include a film, a sheet, a foil, a net, a porous material, a form, and a non-woven material. Separately, a negative active material, a binder, a conducting agent, and a solvent are mixed to prepare a composition for forming a negative active material.

The negative active material may include a carbon-based material such as graphite, carbon, a lithium metal, or an alloy which may intercalate or deintercalate lithium ions, and a silicon oxide-based material.

The binder is used in bonding the active materials and the conducting agent and bonding the active material with respect to the current collector and the amount of the binder may be in the range of about 1 to about 50 parts by weight, for example, about 10 to about 15 parts by weight, based on 100 parts by weight of the negative active material. The binder may be the same material as a kind of the binder in the formation of the positive electrode.

The amount of the conducting agent may be in the range of about 2 to about 30 parts by weight, for example, about 10 to about 15 parts by weight, based on 100 parts by weight of the negative active material. If the amount of the conducting agent is within the above range, a conductivity of a finally obtained electrode is excellent.

The amount of the solvent may be in the range of about 80 to about 400 parts by weight based on 100 parts by weight of the negative active material. If the amount of the solvent is within the above range, an active material layer may be easily formed.

The conducting agent and the solvent may be the same material as those in the formation of the positive electrode.

In general, the negative current collector may have a thickness of about 3 to about 500 $\mu$m and may not be particularly restricted as long as it does not cause a chemical change in the battery of the present invention and has high conductivity. Examples of the negative current collector may include copper; a stainless steel; aluminium; nickel; plasticized carbon; carbon, nickel, titanium, or silver processed on a surface of copper or stainless steel; an aluminium-cadmium alloy. Also, similarly to the positive current collector, a fine roughness may be formed on the negative current collector, thereby improving adhesive strength of the negative active material. Examples of the negative current collector may include a film, a sheet, a foil, a net, a porous material, a form, and a non-woven material

The separator may be interposed between the positive electrode and the negative electrode to form a battery assembly. The battery assembly is wound or folded and then sealed in a cylindrical or rectangular battery case. Then, an organic electrolyte solution is injected into the battery case to complete the manufacture of a lithium ion battery. Alternatively, a plurality of electrode assemblies may be stacked in a bi-cell structure and impregnated with an organic electrolyte solution according to an embodiment of the present invention. The resultant is put into a pouch and sealed, thereby completing the manufacture of a lithium ion polymer battery.

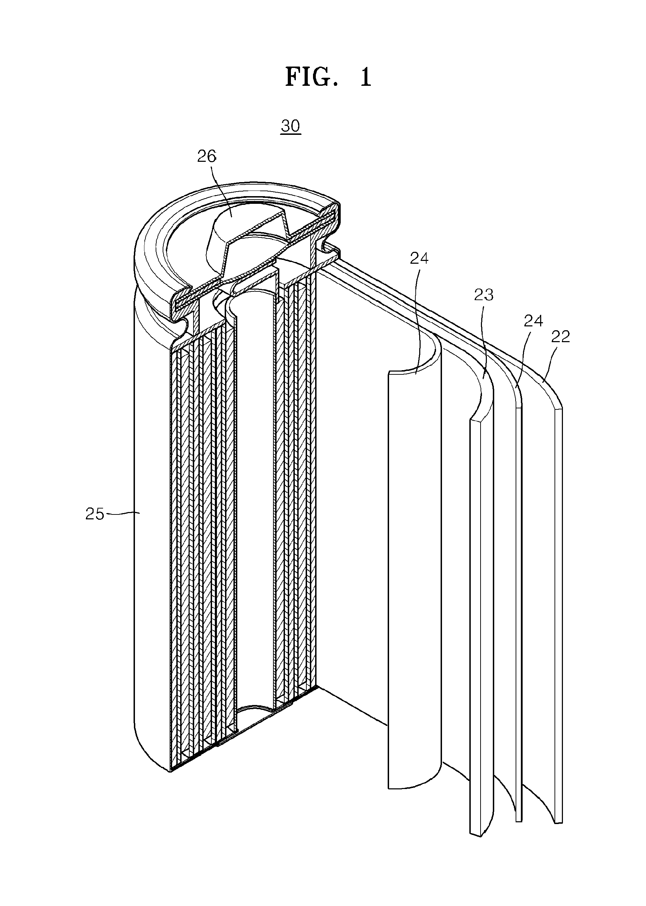

FIG. 1 is a schematic perspective view of a lithium secondary battery according to an embodiment of the present invention. Referring to FIG. 1, a lithium secondary battery 30 according to the present embodiment includes a positive electrode 23 including an positive active material, an negative electrode 22 and a separator 24 interposed between the positive electrode 23 and the negative electrode 22, and an electrolyte (not shown) impregnated into the positive electrode 23, the negative electrode 22 and the separator 24, a battery case 25, and a sealing member 26 sealing the case 25.

The lithium secondary battery 30 is manufactured by sequentially stacking the positive electrode 23, the negative electrode 22 and the separator 24 upon one another, winding the stack in a spiral form, and inserting the wound stack into the battery case 25.

The separator may have a pore diameter of about 0.01 to about 10 $\mu$m and a thickness of about 5 to about 300 $\mu$m. The separator may have the form of a sheet or a non-woven fabric and may be formed of polyolefins such as polyethylene or polypropylene, or glass fiber. When a polymer electrolyte is used as the electrolyte, the separator may be used together.

The electrolyte may be formed of nonaqueous organic solvent and a lithium salt.

The nonaqueous organic solvent should include a chain carbonate and a cyclic carbonate.

Examples of the chain carbonate include dimethyl carbonate (DMC), ethylmethyl carbonate (EMC), diethyl carbonate (DEC), methylpropyl carbonate (MPC), dipropyl carbonate (DPC), ethylpropyl carbonate (EPC), ethylmethyl carbonate (EMC), and the like.

Examples of the cyclic carbonate include ethylene carbonate (EC), propylene carbonate (PC), and the like.

The total amount of the chain carbonate may be in a range of about 50 to about 90 parts by volume based on 100 parts by volume of the nonaqueous organic solvent.

The nonaqueous organic solvent may further include at least one first material selected from the group consisting of an ester solvent, an ether solvent, a ketone solvent, an alcohol solvent, and an aprotic solvent.

The ester solvent may be methyl acetate, ethyl acetate, n-propyl acetate, dimethyl acetate, methyl propionate, ethyl propionate, $\gamma$-butylolactone, decanolide, valerolactone, mevalonolactone, caprolactone, or the like, but is not limited thereto. The ether solvent may be dibutyl ether, tetraglyme, diglyme, dimethoxyethane, 2-methyltetrahydrofuran, tetrahydrofuran, or the like, but is not limited thereto.

The ketone solvent may be cyclohexanone, but is not limited thereto.

The alcohol solvent may be ethyl alcohol, isopropyl alcohol, or the like, but is not limited thereto.

The aprotic solvent may be a nitrile such as R-CN, wherein R is a $C_2$-$C_{20}$ linear, branched, or cyclic hydrocarbon group which may include an double-bonded aromatic ring or an ether bond, an amide such as dimethylformamide, a dioxolane such as 1,3-dioxolane, a sulfolane, or the like, but is not limited thereto.

Examples of the nonaqueous organic solvent include ethylene carbonate (EC), ethylmethyl carbonate (EMC) and dimethyl carbonate (DMC). For example, the nonaqueous organic solvent may be a mixture of ethylene carbonate (EC), ethylmethyl carbonate (EMC) and dimethyl carbonate (DMC) in a volume ratio of 1:1:1, but is not limited thereto.

The lithium salt contained in the electrolyte solution is dissolved in the nonaqueous organic solvent and functions as a source of lithium ions in the lithium secondary battery to operate the lithium secondary battery, and accelerates the migration of lithium ions between the positive electrode and the negative electrode.

For example, the lithium salt may include at least one supporting electrolyte salt selected from the group consisting of $LiPF_6$, $LiBF_4$, $LiSbF_6$, $LiAsF_6$, $LiN(SO_2C_2F_5)_2$, $Li(CF_3SO_2)_2N$, $LiC_4F_9SO_3$, $LiClO_4$, $LiAlO_2$, $LiAlCl_4$, $LiN(C_xF_{2x+1}SO_2)(C_yF_{2y+1}SO_2)$ (where x and y are each independently a natural number), $LiCl$, $LiI$ and lithium bis(oxalato) borate ($LiB(C_2O_4)_2$).

The concentration of the lithium salt may be in the range of about 0.1 M to about 2.0 M, for example, in the range of about 0.6 M to about 2.0 M. The concentration of the lithium salt may be in the range of about 0.7M to about 1.0M. When the concentration of the lithium salt is within the range described above, the electrolyte solution may have desired conductivity and viscosity, and thus lithium ions may be efficiently migrated.

Hereinafter, the embodiments of the present invention will be described more detail with reference to Examples below; however, the present invention may not be limited to the Examples below.

**Synthesis Example 1: Preparation of positive active material containing $Li_5AlO_4$ and $Li_2NiO_2$**

$Li_2O$ and $NiO$ as source materials were mixed with each other in a mole ratio of 1.05:1 to prepare a mixture, and gamma-$Al_2O_3$ in 20 mol based on 100 mol of $Li_2O$ was added to the mixture and mixed by using a mechanical mixer.

Then, in order to suppress generation of an active material, $LiNiO_2$, the resultant was heat treated at about 550 °C for about 10 hours under an inert $N_2$ atmosphere. Here, temperature rising and cooling speed was fixed to 2°C per minute, thereby preparing a positive active material containing a composite that includes $Li_5AlO_4$ and $Li_2NiO_2$. In the positive active material prepared according to Synthesis Example 1, the mixed weight ratio of $Li_5AlO_4$ and $Li_2NiO_2$ was 32:68.

An X-ray diffraction characteristic of the positive active material prepared according to Synthesis Example 1 was analyzed and the result is shown in FIG. 1.

The X-ray diffraction analysis was performed by using an X-ray spectrometer manufactured by PANalytical and under the condition having a scan region: 15-70 degrees, a scan interval: 0.05 degrees, and scan speed: 1 time/ 0.5 sec.

Referring to FIG. 1, it can be seen that $Li_5AlO_4$ and $Li_2NiO_2$ co-exist.

**Synthesis Example 2: Preparation of positive active material containing $Li_5AlO_4$ and $Li_2NiO_2$**

A positive active material containing $Li_5AlO_4$ and $Li_2NiO_2$ in the mixed weight ratio of 19:81 was prepared as in the same manner as in Synthesis Example 1, except that the amount of gamma-Al2O3 is 10 mol based on 100 mole of $Li_2O$.

**Synthesis Example 3: Preparation of positive active material containing $Li_5AlO_4$ and $Li_2NiO_2$**

A positive active material containing $Li_5AlO_4$ and $Li_2NiO_2$ in the mixed weight ratio of 42:58 was prepared as in the same manner as in Synthesis Example 1, except that the amount of gamma-$Al_2O_3$ is 30 mol based on 100 mole of $Li_2O$.

**Synthesis Example 4: Preparation of positive active material containing $Li_5AlO_4$ and $Li_2NiO_2$**

A positive active material containing $Li_5AlO_4$ and $Li_2NiO_2$, in the mixed weight ratio of 49:51 was prepared as in the same manner as in Synthesis Example 1, except that the amount of gamma-$Al_2O_3$ is 40 mol based on 100 mole of $Li_2O$.

**Example 1: Preparation of positive electrode and battery using the positive electrode**

A positive half cell was prepared by using the positive active material containing a composite that includes $Li_5AlO_4$ and $Li_2NiO_2$ prepared according to Synthesis Example 1.

The positive active material, polyvinylidene fluoride, and carbon black in the weight ratio of 90:5:5 were dispersed to N-methylpyrrolidone to prepare a positive electrode slurry.

The positive electrode slurry was coated on an aluminium film to have a thickness of about 60μm so as to prepare a thin pole plate and the thin pole plate was dried at about 135 °C for 3 hours or more and was pressed, thereby preparing a positive electrode.

A negative electrode was formed to include lithium (Li) metal.

An electrolyte was prepared by adding 1.3M $LiPF_6$ to a solvent obtained by mixing ethylene carbonate (EC), ethylmethyl carbonate (EMC), and dimethyl carbonate (DMC) in a volume ratio of 1:1:1.

A separator formed of a porous polyethylene (PE) film may be interposed between the positive electrode and the negative electrode to form a battery assembly. The battery assembly is wound or pressed and then sealed in a battery case. Then, an organic electrolyte solution is injected into the battery case to complete the manufacture of the positive half cell.

**Examples 2-4: Preparation of positive electrode and battery using the positive electrode**

Positive half cells were prepared as in the same manner as in Example 1, except that the positive active materials containing $Li_5AlO_4$ and $Li_2NiO_2$ prepared according to Synthesis Examples 2 through 4 were used, respectively, instead of the positive active material containing $Li_5AlO_4$ and $Li_2NiO_2$ prepared according to Example 1.

**Comparative Example 1: Preparation of positive electrode and battery using the positive electrode**

A positive half cell was prepared as in the same manner as in Example 1, except that $Li_2NiO_2$ was used as a positive active material, instead of the positive active material containing $Li_5AlO_4$ and $Li_2NiO_2$ prepared according to Synthesis Example 1.

**Comparative Example 2: Preparation of positive electrode and battery using the positive electrode**

A positive half cell was prepared as in the same manner as in Example 1, except that the mixture of $Li_5AlO_4$ and $Li_2NiO_2$ in the mixed weight ratio of 32:68 was used as a positive active material, instead of the positive active material containing a composite that includes $Li_5AlO_4$ and $Li_2NiO_2$ prepared according to Synthesis Example 1.

**Comparative Example 3: Preparation of positive electrode and battery using the positive electrode**

A positive half cell was prepared as in the same manner as in Example 1, except that the mixture of $Li_5AlO_4$ and $Li_2NiO_2$ in the mixed weight ratio of 19:81 was used as a positive active material, instead of the positive active material containing a composite that includes $Li_5AlO_4$ and $Li_2NiO_2$ prepared according to Synthesis Example 1.

In the positive half cells prepared according Examples 1 through 4 and Comparative Example 1, weight of the positive active material, charge capacity, gas generation amount, gas generation amount per weight, and gas generation amount per capacity were evaluated, respectively, and results are shown in Table 1 below.

The gas generation amount was evaluated by using a pouch as a battery case in Examples 1 through 4 and collecting gas generated while charging the battery. The gas generation amount per weight and the gas generation amount per capacity were evaluated by dividing the gas generation amount by weight of the positive active material and capacity of the corresponding cells.

[Table 1]

| | Charge capacity (mAh/g) | Gas generation amount (cc) | Gas generation amount per weight (cc/g) | Gas generation amount per capacity (cc/ mAh/g)) |
|---|---|---|---|---|
| Example 1 | 413 | 5.5 | 4.089 | 0.013 |
| Example 2 | 417 | 6.1 | 4.317 | 0.015 |
| Example 3 | 401 | 5.2 | 3.754 | 0.013 |
| Example 4 | 322 | 4.9 | 3.614 | 0.015 |
| Comparative Example 1 | 427 | 7.5 | 5.147 | 0.018 |
| Comparative Example 2 | 302 | 5.8 | 4.067 | 0.019 |
| Comparative Example 3 | 389 | 6.4 | 4.256 | 0.016 |

According to Table 1, the positive half cells of Examples 1 through 4 may efficiently suppress gas generation of $Li_2NiO_2$ compared with the positive half cell of Comparative Examples 1 through 3.

It should be understood that the exemplary embodiments described therein should be considered in a descriptive sense only and not for purposes of limitation. Descriptions of features or aspects within each embodiment should typically be considered as available for other similar features or aspects in other embodiments.

FIG. 1 is a diagram of a lithium secondary battery according to an embodiment of the present invention; and

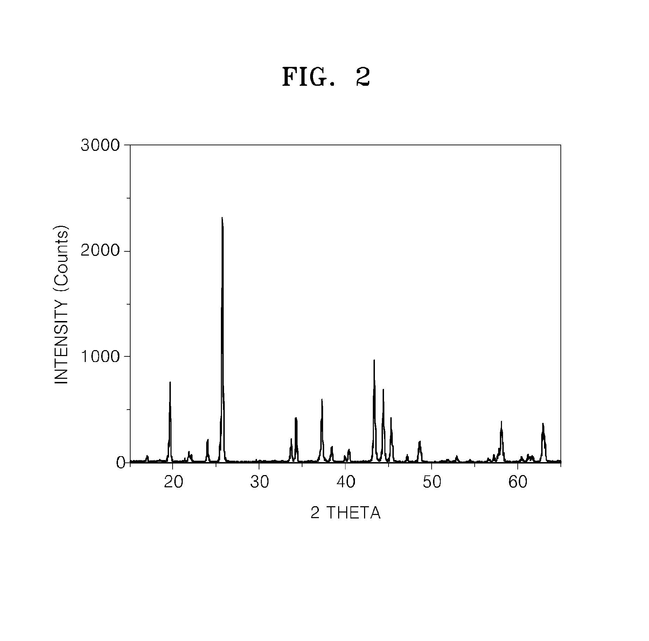

FIG. 2 is a graph showing an X-ray diffraction analysis of a positive active material prepared according to Synthesis Example 1.

**Claims**

1. A material for a positive electrode of a lithium secondary battery, comprising a composite of lithium nickel oxide and a lithium aluminium oxide, wherein the lithium aluminium oxide has the formula $Li_aAl_xO_b$, where $a$ is in the range of about 0.1 to about 5.5, $x$ is in the range of about 1 to about 5, and $b$ is in the range of about 1.5 to about 8.

2. A material according to claim 1, wherein the lithium nickel oxide is $Li_2NiO_2$.

3. A material according to claim 1 or 2, wherein the lithium aluminium oxide is at least one selected from the group $Li_5AlO_4$, $LiAlO_2$, $LiAl_5O_8$.

4. A material according to any one of claims 1 to 3 wherein the lithium aluminium oxide is present in the positive electrode in the range of about 0.001 to about 100 parts by weight per 100 parts by weight of lithium nickel oxide.

5. A material according to any one of the preceding claims, wherein a main peak of a Bragg angle 2θ for CuK-alpha characteristic X-ray wavelength, 1.541 Å of the material appears at least between 25 and 28 degrees.

6. A material according to any one of the preceding claims, wherein peaks of a Bragg angle 2θ for CuK-alpha characteristic X-ray wavelength, 1.541 Å of the material appear at between 32 and 35 degrees.

7. A material according to any one of the preceding claims, further comprising at least one lithium transition metal oxide, wherein the lithium nickel oxide is in the range of about 0.1 to about 20 parts by weight per 100 parts by weight of the lithium transition metal oxide.

8. A material according to any one of the preceding claims, having an average diameter in the range of 1 to 30μm, and may be between about 3 and about 7μm.

9. A lithium secondary battery containing a positive electrode comprising a material according to any one of the preceding claims.

10. A method of manufacturing a material for the positive electrode of a lithium secondary battery, the method comprising mixing a lithium oxide, a nickel oxide and an aluminium precursor to form a mixture, and heat treating the resulting mixture to form a composite of lithium nickel oxide and a lithium aluminium oxide.

11. A method according to claim 10, wherein the nickel oxide is in the range of about 0.4 to about 2 mol per 1 mol of the lithium oxide, and the aluminium precursor is in the range of 0.01 to about 0.5 mol based on 1 mol of the lithium oxide.

12. A method according to claim 10 or 11, wherein the lithium oxide is $Li_2O$ and the nickel oxide is NiO.

13. A method according to any one of claims 10 to 12, in which the aluminium precursor is one of gamma-aluminium or aluminium hydroxide.

14. A method according to any one of claims 10 to 13, wherein the thermal treatment is done at a temperature of about 500 to 700°C under an inert atmosphere.

15. A method according to any one of claims 10 to 14, further comprising adding a lithium transition metal oxide to the mixture.

# FIG. 1

# FIG. 2

Europäisches
Patentamt

European
Patent Office

Office européen
des brevets

# EUROPEAN SEARCH REPORT

**Application Number**

EP 11 17 1713

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 845 824 A1 (SUMITOMO CHEMICAL CO [JP]) 3 June 1998 (1998-06-03) * column 3, line 11 - line 47 * * column 4, line 55 - line 57 * ----- | 1,3,4, 10-15 | INV. H01M4/485 H01M4/525 |
| X | US 2004/258836 A1 (BESENHARD JURGEN OTTO [AT] ET AL BESENHARD JUERGEN OTTO [AT] ET AL) 23 December 2004 (2004-12-23) * paragraph [0057] * ----- | 1,3,4,9 | |
| A | US 6 007 947 A (MAYER STEVEN T [US]) 28 December 1999 (1999-12-28) ----- | 1-15 | |

| | |
|---|---|
| | TECHNICAL FIELDS SEARCHED (IPC) |
| | H01M |

The present search report has been drawn up for all claims

| Place of search | Date of completion of the search | Examiner |
|---|---|---|
| Munich | 17 August 2011 | Martín Fernández, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 17 1713

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2011

| Patent document cited in search report | | Publication date | Patent family member(s) | | Publication date |
|---|---|---|---|---|---|
| EP 0845824 | A1 | 03-06-1998 | CA | 2222529 A1 | 28-05-1998 |
| | | | CN | 1188334 A | 22-07-1998 |
| | | | DE | 69736943 T2 | 04-10-2007 |
| | | | ID | 18979 A | 28-05-1998 |
| | | | JP | 2008198620 A | 28-08-2008 |
| | | | TW | 393790 B | 11-06-2000 |
| | | | US | 2001036577 A1 | 01-11-2001 |
| US 2004258836 | A1 | 23-12-2004 | KR | 20050000353 A | 03-01-2005 |
| US 6007947 | A | 28-12-1999 | WO | 9824131 A1 | 04-06-1998 |
| | | | US | 6379842 B1 | 30-04-2002 |
| | | | US | 5783333 A | 21-07-1998 |

EPO FORM P0459

For more details about this annex : see Official Journal of the European Patent Office, No. 12/82